# EUROPÄISCHE PATENTANMELDUNG

(11) **EP 4 556 937 A1**
(43) Veröffentlichungstag der Anmeldung: **21.05.2025**
(21) Anmeldenummer: 24190523.1
(22) Anmeldetag: 24.07.2024
(51) Int. Cl.: G01S 7/00, G01S 7/41, G01S 13/931, G01S 13/04

(54) **ERFASSUNGSEINRICHTUNG FÜR BEDIENHANDLUNGEN AN KRAFTFAHRZEUGEN**

(30) Priorität: 15.11.2023 DE 102023131773
(71) Anmelder: HUF Hülsbeck & Fürst GmbH & Co. KG, 42551 Velbert (DE)
(72) Erfinder: Wehner, Philipp, 45879 Gelsenkirchen (DE); Schindler, Mirko, 42549 Velbert (DE); Leib, Steffen, 40885 Ratingen (DE)
(74) Vertreter: Zenz Patentanwälte Partnerschaft mbB

(57) **Zusammenfassung**

Eine Erfassungseinrichtung (20) für Bedienhandlungen an Kraftfahrzeugen besteht aus mindestens einem Radarsensor (22) und einer Steuerschaltung (21), die mit dem Radarsensor (22) verbunden ist. Die Steuerschaltung (21) steuert den Radarsensor (22) an und verarbeitet dessen Signale. Die Steuerschaltung (21) betreibt den Radarsensor (22) in mindestens zwei verschiedenen Betriebsmodi, wobei der Energiebedarf im ersten Modus höher ist als im zweiten Modus.

Es werden Prognosedaten erstellt oder von externen Datenquellen (30) empfangen, die zeitbezogene Informationen über erwartete Bedienvorgänge enthalten. Diese Daten werden in einem Speicher (24) der Steuerschaltung (21) gespeichert. Die Auswahl des Betriebsmodus erfolgt dann in Abhängigkeit von den im Speicher (24) gespeicherten Prognosedaten, wodurch Energie gespart und die Funktionalität optimiert wird.

## Beschreibung

Die vorliegende Erfindung betrifft eine Erfassungseinrichtung für Bedienhandlungen an Kraftfahrzeugen.

Insbesondere betrifft die Erfindung eine Erfassungseinrichtung, die wenigstens einen Radarsensor aufweist, der mit wenigstens einer Steuerschaltung gekoppelt ist. Die Steuerschaltung ist dazu ausgebildet, den Radarsensor anzusteuern und dessen Signale zu verarbeiten.

Radarsensoren werden an Fahrzeugen an verschiedenen Stellen eingesetzt, insbesondere um den Bereich vor dem Fahrzeug zu überwachen und Kollisionen mit Gegenständen oder Lebewesen zu vermeiden. Aber auch zur Erfassung von Bedienhandlungen des Fahrzeugnutzers können Radarsensoren eingesetzt werden. Radarsensoren ermöglichen eine Abstandsmessung von Objekten zum Sensor, auch Relativgeschwindigkeiten von Objekten zum Radarsensor können erfasst werden. Zur Detektion sendet der Radarsensor Strahlung in Form einer Strahlungs- oder Radarkeule aus und detektiert die reflektierte Strahlung.

Um den Energiebedarf eines solchen Sensorbetriebs zu minimieren, können Kompromisse hinsichtlich der Erfassungsreichweite, der Erfassungshäufigkeit und allgemein der Betriebsparameter eines Sensors eingegangen werden.

Aufgabe der Erfindung ist es, eine Detektionseinrichtung zur Verfügung zu stellen, die im Betriebszustand eines Radarsensors eine hohe Detektionsgenauigkeit bei gleichzeitig reduziertem Gesamtenergiebedarf ermöglicht.

Die Aufgabe wird durch eine Erfassungseinrichtung mit den Merkmalen des Patentanspruchs 1 gelöst.

Die Erfassungseinrichtung der eingangs genannten Art weist erfindungsgemäß eine Steuerschaltung auf, die dazu ausgebildet ist, den Radarsensor gemäß mindestens zwei unterschiedlichen Betriebsmodi anzusteuern. Die beiden unterschiedlichen Betriebsmodi unterscheiden sich hinsichtlich ihres Energiebedarfs, indem der Radarsensor im ersten Betriebsmodus mit Betriebsparametern betrieben wird, die einen höheren Energiebedarf verursachen als im zweiten Betriebsmodus. Der zweite Betriebsmodus kann dementsprechend ein Betriebsmodus sein, in dem der Radar-Sensor ganz ausgeschaltet ist, sich im Stand-by-Modus befindet oder mit derart veränderten Betriebsparametern betrieben wird, dass sein Energiebedarf verringert wird, z. B. durch Ansteuerung zur Erfassung mit geringerer Messhäufigkeit oder geringerer Reichweite. Im ersten Messbetrieb wird der Radarsensor so betrieben, dass qualitativ hochwertige Messdaten erfasst werden, um eine Bedienhandlung eines Benutzers möglichst genau und fehlerfrei zu erkennen und auszuwerten.

Erfindungsgemäß werden von der Erfassungseinrichtung Prognosedaten verwendet, die Kriterien für die Auswahl des jeweiligen Betriebsmodus liefern. Diese Prognosedaten geben Wahrscheinlichkeiten dafür an, ob zu dem aktuellen Zeitpunkt, zu dem die Erfassungseinrichtung betrieben wird, mit einer Bedienhandlung zu rechnen ist oder ob mit größerer Wahrscheinlichkeit keine Bedienhandlung erfolgt. Die Vorhersagedaten können in der Steuerschaltung selbst erzeugt und dort gespeichert worden sein oder der Steuerschaltung von externen Datenquellen zugeführt und dann in der Steuerschaltung gespeichert worden sein. Die Steuerschaltung ist erfindungsgemäß dazu ausgebildet, den Betriebsmodus des wenigstens einen Radarsensors in Abhängigkeit von den gespeicherten Prognosedaten auszuwählen.

Die Prognosedaten ermöglichen es, in Abhängigkeit von Zeitdaten oder anderen Daten mit Hilfe der Steuerschaltung einen angepassten Betriebsmodus mit optimiertem Energieverbrauch zu wählen, ohne den Betriebskomfort der Erfassungseinrichtung wesentlich zu verschlechtern. Die Prognosedaten können vorgegebene oder erlernte Daten über ein zeitliches Nutzungsverhalten darstellen, sie können alternativ oder zusätzlich auch Daten über andere Parameter enthalten, z. B. Ortsdaten oder Betriebsdaten eines Fahrzeugs, an dem die Erfassungseinrichtung eingesetzt wird. Die Prognosedaten sind in einem Speicher der Steuerschaltung abgelegt und können aktualisiert werden, um einem geänderten Nutzungsverhalten oder einer besseren Auswertung des Nutzungsverhaltens und damit verbesserten Prognosedaten Rechnung zu tragen. Die Steuerschaltung mit den gespeicherten Prognosedaten kann somit ein lernendes System sein, das z.B. selbstlernend ist, d.h. die Prognosedaten aus den in der Steuerschaltung vorhandenen Daten selbst generiert, oder das die Prognosedaten von außen empfängt und speichert. Die von außen empfangenen Prognosedaten können neben der Information über die tatsächliche Detektion des mindestens einen Radarsensors auch zusätzliche Daten enthalten, z. B. Daten, die der Steuerschaltung an sich nicht zugänglich sind.

In einer bevorzugten Ausführungsform der Erfindung wird die Energieeinsparung im zweiten Betriebsmodus dadurch erreicht, dass im ersten Betriebsmodus im Vergleich zum zweiten Betriebsmodus häufiger Messungen mit dem Radarsensor ausgelöst werden.

Bei dieser Ausführungsform ist die Steuerschaltung also so ausgebildet, dass sie die Häufigkeit der Messungen reduziert, um Energie zu sparen. Dadurch wird gegenüber einer vollständigen Abschaltung des Radarsensors sichergestellt, dass bei reduzierter Reaktionsgeschwindigkeit dennoch Bedienhandlungen detektiert werden, auch wenn diese gemäß den Prognosedaten nicht zu erwarten sind.

In einer bevorzugten Ausführungsform der Erfindung ist die Steuerschaltung dazu ausgebildet, Signaldaten des Radarsensors zusammen mit Zeitinformationen als Signalhistorie in einem Speicher abzulegen und - zumindest teilweise unter Auswertung dieser Signalhistorie - die Prognosedaten zu erzeugen. Bei dieser Ausführungsform sind die von der Steuerschaltung selbst über die Radarsensoren erfassten Messdaten ein wesentlicher Bestandteil der Prognosedaten. So kann die Steuerschaltung beispielsweise die Signaldatenrate des Radarsensors zusammen mit einem Zeitstempel in einer Speichertabelle ablegen. Auf Basis dieser Daten können periodisch oder durch einen Trigger ausgelöst Prognosedaten von der Steuerschaltung erzeugt werden, die z. B. die Auslösehäufigkeit des Radarsensors in Zeitfenster einteilt, z. B. kategorisiert nach Wochentagen und Zeitscheiben innerhalb dieser Tage. Diese Auswertung kann eine einfache statistische Tabellenauswertung sein, bei der die Häufigkeiten innerhalb der Tage und Zeitscheiben klassifiziert werden. Es können aber auch komplexere Mustererkennungen durchgeführt werden, um systematische Wiederholungen von Betriebsvorgängen in die Prognosedaten einzubringen.

In einer bevorzugten Ausführungsform ist die Steuerschaltung dazu ausgebildet, die Signalhistorie zu aktualisieren. Obwohl prinzipiell beliebig lange auf vorhandene Prognosedaten zurückgegriffen werden kann, ist es bevorzugt, die Signalhistorie regelmäßig oder getriggert zu aktualisieren, so dass die Steuerschaltung aus diesen aktualisierten Daten der Signalhistorie auch aktualisierte Prognosedaten erzeugen kann. Dabei kann die Steuerschaltung beispielsweise einen First-in-First-out-Speicher verwenden, bei dem die ältesten Daten zugunsten der neuesten Daten verworfen werden, es kann auch eine Gewichtung der Daten in Abhängigkeit von ihrem Alter vorgenommen werden.

Auf diese Weise ist sichergestellt, dass z.B. auch bei einem geänderten Nutzungsverhalten oder auch bei einem gänzlich anderen Nutzer (z.B. bei einem Fahrzeugverkauf) die Prognosedaten an das aktuelle Nutzungsverhalten angepasst werden.

In einer besonders bevorzugten Ausgestaltung der Erfindung ist die Steuerschaltung dazu ausgebildet, mit zumindest einer Teilmenge der Daten der Signalhistorie ein neuronales Netz zu trainieren und die Prognosedaten zumindest teilweise aus den Ausgabedaten des neuronalen Netzes zu bilden. Die Verwendung der SignalHistorie als Trainingsdaten in einem einfachen neuronalen Netz, das innerhalb der Regelschaltung betrieben wird, ermöglicht eine Mustererkennung der Bediendaten, ohne dass definierte statistische Verfahren angewendet werden müssen. Mit Hilfe des einmal trainierten neuronalen Netzes kann die Steuerschaltung im Betrieb durch Eingabe aktueller Daten, z.B. einer Uhrzeit und eines Wochentages in das neuronale Netz, eine entsprechende Bedienwahrscheinlichkeit aus dem neuronalen Netz als Prognosedaten generieren. Prinzipiell kann das neuronale Netz auch auf weitere Eingangsdaten trainiert werden, sofern diese der Steuerschaltung zur Verfügung stehen.

Dabei ist es bevorzugt, wenn das Training des neuronalen Netzes in vorgegebenen Zeitabständen oder aufgrund einer von außen ausgelösten Triggerung jeweils erneut durchgeführt wird oder das neuronale Netz zusätzlich mit den neuesten Daten der Signalhistorie weiter trainiert wird. Auf diese Weise kann sich das neuronale Netz an das jeweils aktuelle Betriebsverhalten anpassen.

In einer bevorzugten Weiterbildung der Erfindung ist die Steuerschaltung so ausgebildet, dass ihr von einer externen Datenquelle Umgebungsinformationen zur Verfügung gestellt werden und diese zusammen mit den Prognosedaten ausgewertet werden, um einen Betriebsmodus für den Radarsensor auszuwählen. Dazu weist die Steuerschaltung eine geeignete Datenschnittstelle zum Empfang der Daten auf. Die externe Datenquelle kann beispielsweise durch eine zentrale Steuerschaltung eines Fahrzeuges gebildet sein, an dem die Erfassungseinrichtung eingesetzt ist.

Bei dieser Ausführungsform kann die Steuerschaltung zusätzlich zu den Prognosedaten weitere Informationen zur Auswahl der Betriebsart erhalten. Diese zusätzlichen Umgebungsinformationen können beispielsweise darauf hinweisen, dass für das Fahrzeug eine außergewöhnliche Betriebssituation vorliegt und daher die für einen durchschnittlichen Standardfall gebildeten Prognosedaten nicht anwendbar sind.

In einer bevorzugten Ausgestaltung sind die Umgebungsinformationen zumindest teilweise ausgewählt aus der Gruppe von Informationen von aktuellen Ortsinformationen und/oder aktuellen Betriebsinformationen des Fahrzeugs, an dem die Erfassungseinrichtung angeordnet ist, und/oder aktuellen Informationen von mobilen Geräten, die mit der externen Datenquelle gekoppelt sind.

In dieser Ausgestaltung kann die Steuerschaltung beispielsweise anhand der Ortsinformationen entscheiden, ob sich das Fahrzeug an einem der üblichen Betriebsorte befindet und somit die Prognosedaten eine zutreffende Prognose erlauben, oder ob die Ortsinformationen darauf hindeuten, dass das Fahrzeug an ungewöhnlichen Orten betrieben wird oder abgestellt ist. Andere Informationen über den Betrieb eines Fahrzeugs können beispielsweise Rückschlüsse auf den Fahrzustand des Fahrzeugs zulassen, so dass das Steuergerät eine geeignete Betriebsart wählen kann. Informationen über mobile Geräte, die mit der externen Datenquelle gekoppelt sind, ermöglichen der Steuerschaltung den Zugriff auf zugeordnete Prognosedaten, wenn beispielsweise für verschiedene Bediener unterschiedliche Prognosedaten in der Steuerschaltung gespeichert sind. Dabei kann die Steuerschaltung dann Prognosedaten speichern, wenn diese eindeutig bestimmten Bedienpersonen mit bestimmten Mobilgeräten zugeordnet werden können.

In einer bevorzugten Ausgestaltung der Erfindung ist die Steuerschaltung dazu ausgebildet, den Radarsensor mit mehr als zwei Betriebsmodi anzusteuern, wobei sich die Betriebsmodi jeweils paarweise in ihrem Energiebedarf unterscheiden.

Bei dieser Ausgestaltung kann es beispielsweise Betriebsmodi geben, die einerseits mit hohem Energiebedarf und sehr hoher Detektionsgenauigkeit bzw. Detektionshäufigkeit betrieben werden und dementsprechend eine besonders komfortable und technisch sichere Detektion ermöglichen. Andererseits kann es z.B. einen Betriebsmodus geben, in dem der Energiezustand nahezu auf Null reduziert wird, wenn die Prognosedaten eine Bedienung als äußerst unwahrscheinlich erscheinen lassen. Zwischen diesen Extremen kann es eine beliebige Anzahl von Betriebszuständen zur Ansteuerung des Radarsensors geben, wobei z.B. auch eine lineare Anpassung bestimmter Betriebsparameter erfolgen kann, z.B. durch eine Umrechnung der Bedienungswahrscheinlichkeit aus den Prognosedaten in eine Erfassungshäufigkeit, die dann von der Steuerschaltung zur Erfassung mit dem Radarsensor verwendet wird.

In einer weiteren bevorzugten Ausgestaltung der Erfindung weist die Erfassungseinrichtung mehrere Radarsensoren auf, die von der Steuerschaltung in Abhängigkeit von den Prognosedaten einzeln, in Gruppen oder gemeinsam angesteuert werden. Bei dieser Ausgestaltung ist es möglich, jedem Radarsensor eigene Prognosedaten zuzuordnen oder Gruppen von Radarsensoren gemeinsam auf Basis einheitlicher Prognosedaten anzusteuern. Insbesondere bei Detektionseinrichtungen mit mehreren Radarsensoren kann so der Energiebedarf optimiert werden, wenn beispielsweise erkannt wird, dass bei einer größeren Anzahl von Radarsensoren aufgrund des spezifischen und persönlichen Nutzerverhaltens regelmäßig nur einer der Radarsensoren als erster auslöst. Dies ist z.B. der Fall, wenn der Benutzer unbewusste, aber routinemäßig wiederholte Verhaltensweisen am Fahrzeug ausführt, die sich in den Prognosedaten widerspiegeln.

Werden solche Verhaltensweisen in den Prognosedaten abgebildet, können ohnehin selten oder kaum genutzte Radarsensoren mit reduziertem Energiebedarf betrieben werden.

In einer weiteren Ausgestaltung der Erfindung ist vorgesehen, dass in der Steuereinrichtung mehrere Sätze von Prognosedaten gespeichert werden, die jeweils einem oder mehreren Radarsensoren zugeordnet sind. Wie oben beschrieben, kann es unterschiedliche Sätze von Prognosedaten für unterschiedliche Bediener geben, die beispielsweise durch Informationen von Mobilgeräten identifiziert werden. Darüber hinaus kann es unterschiedliche Sätze von Prognosedaten für unterschiedliche Aufenthaltsorte des Fahrzeugs oder Fahrzustände oder auch Jahreszeiten geben.

Die Erfindung wird nun anhand der beigefügten Zeichnung näher erläutert.
Figur 1 zeigt schematisch die Kopplung der Komponenten einer ersten Ausführungsform der Erfindung;
Figur 2 zeigt ein Ablaufdiagramm mit den Vorgängen der Erstellung von Prognosedaten und deren Verwendung im Meßbetrieb;

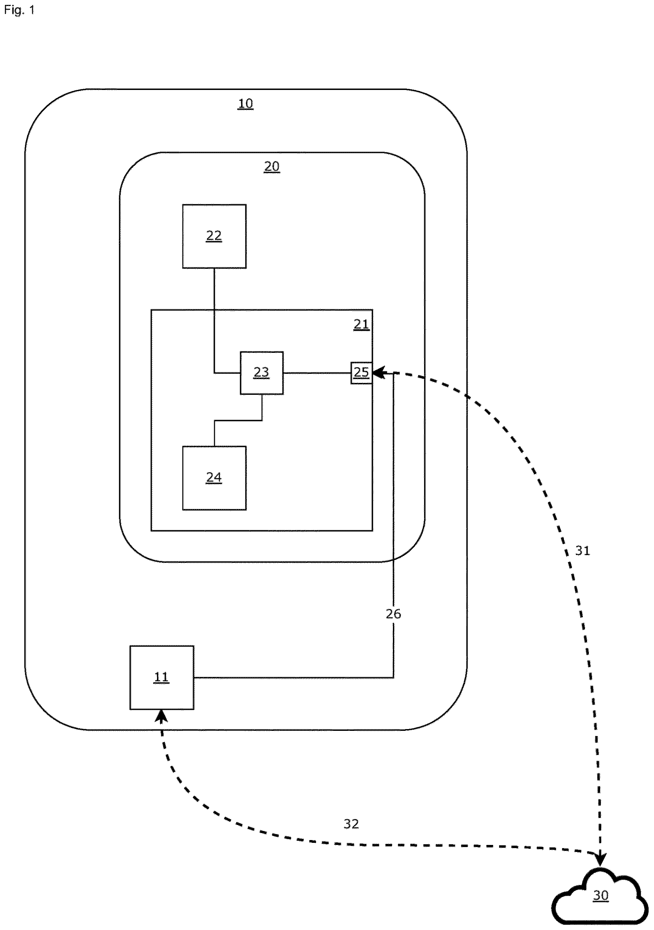

Figur 1 zeigt schematisch die Kopplung und Anordnung der Komponenten einer Erfassungseinrichtung gemäß einem ersten Ausführungsbeispiel der Erfindung.

Schematisch dargestellt ist ein Fahrzeug 10, das nicht Bestandteil der Erfindung ist. In dem Fahrzeug 10 ist eine Erfassungseinrichtung 20 an einer Position im Fahrzeug angeordnet, an welcher ein Bedienvorgang mittels eines Radarsensors erfasst werden soll. Dies kann beispielsweise im Heckbereich unterhalb des Stoßfängers sein, um die Betätigung der Heckklappe durch eine Bewegungsgeste des Fußes zu erfassen.

Weiterhin ist eine zentrale Steuereinrichtung 11 des Fahrzeugs 10 dargestellt, die nicht Bestandteil der Erfindung ist. Eine solche zentrale Steuereinrichtung 11 weisen Fahrzeuge auf, um die im Fahrzeug über Bussysteme oder andere Signalleitungen zur Verfügung gestellten Fahrzeugdaten zentral zu verarbeiten.

Die Erfassungseinrichtung 20 gemäß dem Ausführungsbeispiel weist eine Steuerschaltung 21 auf, die ihrerseits einen Mikrocontroller 23, eine Datenschnittstelle 25 und einen Speicher 24 enthält (weitere Komponenten können enthalten sein, sind hier jedoch nicht dargestellt). Mit dem Mikrocontroller 23 der Steuerschaltung 21 ist ein Radarsensor 22 gekoppelt. Der Radarsensor 22 ist mit seinem Erfassungsbereich auf einen Bereich außerhalb des Fahrzeugs oder auf einen Bereich innerhalb des Fahrzeugs ausgerichtet, je nachdem, wo Bedienhandlungen und Annäherungen von Objekten zu erwarten sind. Die Steuerschaltung 21 kann über den Mikrocontroller 23 den Radarsensor 22 ansteuern und dessen Signale auswerten. Der Mikrocontroller 23 kann Daten in den Speicher 24 schreiben und Daten aus dem Speicher 24 lesen. Über die Schnittstelle 25 kann der Mikrocontroller 23 auch Daten an externe Einrichtungen bereitstellen oder Daten empfangen.

In der dargestellten Ausführungsform ist die Schnittstelle 25 über eine drahtgebundene Verbindung mit der zentralen Steuereinrichtung 11 des Fahrzeugs 10 gekoppelt. Über eine drahtgebundene Verbindung 26 können Umgebungsdaten und Fahrzeugdaten, die in der zentralen Steuereinrichtung 11 erfasst oder vorgehalten werden, über die Schnittstelle 25 dem Mikrocontroller 23 zur Verfügung gestellt werden. In der dargestellten Ausführungsform ist ferner gezeigt, dass die Schnittstelle 25 auch eine drahtlose Schnittstelle umfassen kann, um beispielsweise über ein Mobilfunknetz auf eine Cloud 30 zuzugreifen, um dort gespeicherte Daten abzurufen oder Daten an die Cloud 30 bereitzustellen und dort Prognosedaten generieren zu lassen, die dann wiederum über die Verbindung 31 an die Steuerschaltung 21 zurückgeliefert werden. Zwischen der Cloud 30 und der zentralen Steuereinrichtung 11 kann auch eine drahtlose Verbindung 32 aufgebaut werden, beispielsweise wenn ausschließlich die zentrale Steuereinrichtung 11 des Fahrzeugs 10 für den Datenaustausch genutzt werden soll. In diesem Fall können beispielsweise die Daten einer Signalhistorie des Radarsensors 22 über den Mikrocontroller 23 und über die Schnittstelle 25 drahtgebunden an die zentrale Steuereinrichtung 11 übertragen werden und von dort an die Cloud 30. Auf dem gleichen Weg können dann die verarbeiteten Daten als Prognosedaten von der Cloud 30 über die zentrale Steuereinrichtung 11 zurück an die Steuerschaltung 5 übertragen werden.

Anhand dieser schematischen Darstellung kann nachvollzogen werden, dass die Daten des Radarsensors 22 von dem Mikrocontroller 23 erfasst werden und der Mikrocontroller 23 über die Erfassung des Radarsensors 22 durch Vorgabe von dessen Betriebsparametern entscheidet. Bei dieser Ausführungsform sind die Prognosedaten, anhand derer der Mikrocontroller 23 die Betriebsparameter des Radarsensors 22 bestimmt, in dem Speicher 24 gespeichert. Die abgespeicherten Prognosedaten können beispielsweise in Form eines Wochenschemas oder zeitlich aufgelöst mit beliebiger Einteilung in Zeitscheiben vorliegen. Der Mikrocontroller 23 kann die Betriebsparameter des Radarsensors 22 anhand der Prognosedaten aus dem Speicher 24 ermitteln und dabei auch weitere Daten einbeziehen, die er beispielsweise über die Schnittstelle 25 von der zentralen Steuereinrichtung 11 oder direkt über die Verbindung 31 aus der Cloud 30 erhält.

Zur Generierung neuer Prognosedaten kann der Mikrocontroller 23 auf eine zeitliche Historie von Signaldaten des Radarsensors 22 zurückgreifen, die ebenfalls im Speicher 24 abgelegt sein können. Bei dieser Ausgestaltung kann der Mikrocontroller die Prognosedaten aus den gespeicherten Daten selbst generieren und die Prognosedaten dann im Speicher 24 für einen späteren Zugriff speichern. Alternativ kann der Mikrocontroller 23 auch gespeicherte Daten einer Signalhistorie des Radarsensors 22 über die Schnittstelle 25 der zentralen Steuereinrichtung 11 zur Verfügung stellen, die ihrerseits die Prognosedaten generiert und zurückliefert, so dass der Mikrocontroller 23 die Prognosedaten dann im Speicher 24 ablegen kann. Alternativ können die Daten einer Signalhistorie auch an die Cloud 30 geliefert werden, wo dann komplexere Auswertungen durchgeführt werden, um resultierende Prognosedaten an die Steuerschaltung 21, insbesondere den Mikrocontroller 23, zur Speicherung im Speicher 24 zurückzuliefern. Bei den Prognosedaten kann es sich um tabellarische Daten handeln, es kann sich bei den Prognosedaten aber auch um ein neuronales Netz handeln, das mit den historischen Signaldaten trainiert wurde, die der Mikrocontroller im Speicher 24 hinsichtlich der Gewichte und anderer Daten des neuronalen Netzes speichert und das neuronale Netz wiederum ausführt, um aktuelle Prognosedaten zu erzeugen und die Betriebsparameter des Radarsensors 22 zu bestimmen. Dementsprechend kann das neuronale Netz prinzipiell im Mikrocontroller 23 selbst trainiert werden, das Training des neuronalen Netzes kann aber auch an eine Cloud 30 sowie an das zentrale Steuergerät 11 des Fahrzeugs ausgelagert werden.

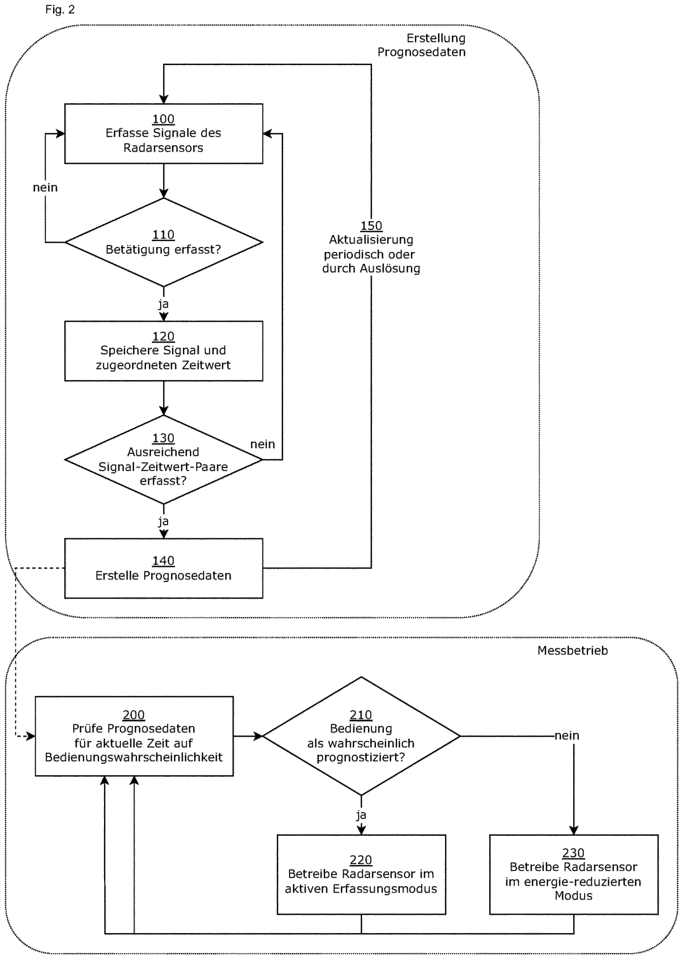

Figur 2 zeigt schematisch den Ablauf der Erzeugung von Prognosedaten sowie die Verwendung der Prognosedaten in einem Messbetrieb. Diese Ablaufdiagramme zeigen den funktionalen Aufbau der Steuerschaltung der Ausführungsform.

Im Verfahrensschritt 100 werden Signale des Radarsensors von der Steuerschaltung erfasst. Im Verfahrensschritt 110 prüft die Steuerschaltung, ob die erfassten Signaldaten auf eine tatsächliche Betätigung des Radarsensors hindeuten. Ist dies nicht der Fall, kehrt das Verfahren zu Schritt 100 zurück. Wird in Schritt 110 tatsächlich eine Betätigung erkannt, so wird diese an übergeordnete Stellen, insbesondere eine zentrale Steuereinrichtung im Fahrzeug, gemeldet und das Signal und der zugeordnete Zeitwert von der Steuerschaltung gespeichert. In Schritt 130 wird geprüft, ob die bisher erfassten Signal- und Zeitwertpaare bereits eine repräsentative Auswertung zur Erstellung von Prognosedaten erlauben. Sind noch nicht genügend Daten vorhanden, kehrt das Verfahren zu Schritt 100 zurück. Sind genügend Signal-Zeitwertpaare erfasst, werden in Schritt 140 Prognosedaten erzeugt, z. B. tabellarische Prognosedaten durch statistische Auswertung der Betätigungswahrscheinlichkeit in Abhängigkeit von einem Zeitwert. Alternativ können die Daten der aktuellen Signalhistorie verwendet werden, um ein neuronales Netz zu trainieren.

Die Schritte 100 bis 140 können in Schritt 150 in vorgegebenen Zeitintervallen oder anlassbezogen beliebig oft wiederholt werden, um jederzeit aktuelle Prognosedaten zu erhalten. Dies kann z.B. nach einer vorgegebenen Anzahl von Betätigungen, nach einem zeitlich periodischen Muster oder auch durch externe Triggerung erfolgen. Die Schritte 100-150 werden unabhängig vom eigentlichen Messbetrieb durchgeführt. Im Messbetrieb wird, wie in den Schritten 200-230 dargestellt, auf die Prognosedaten zurückgegriffen, sofern diese vorhanden sind. Dazu wird in Schritt 200 geprüft, ob Prognosedaten für den aktuellen Zeitwert vorliegen, und diese werden abgerufen. In Schritt 210 wird geprüft, wie wahrscheinlich die Betätigung zu diesem Zeitpunkt ist, so dass der Radarsensor mit hohem Energiebedarf und hoher Detektionsgenauigkeit betrieben werden muss. Ist aufgrund der Prognosedaten eine Betätigung in diesem Zeitbereich wahrscheinlich, wird der Radarsensor von der Steuerschaltung in Schritt 220 in einem aktiven Erfassungsmodus, d. h. mit erhöhtem Energiebedarf, betrieben. Zeigen die Prognosedaten jedoch an, dass ein Betrieb zu diesem Zeitpunkt unwahrscheinlich ist, wird der Radarsensor in Schritt 230 in einem Modus mit reduziertem Energiebedarf betrieben. Anschließend wird zu Schritt 200 zurückgekehrt, wobei eine sinnvolle Verzögerung vorgesehen werden kann, z.B. so, dass eine erneute Überprüfung der Prognosedaten nur in bestimmten Zeitabständen von einigen Sekunden oder Minuten erfolgt.

Der dargestellte Messbetrieb kann auch deutlich komplexer ausfallen, insbesondere wenn mehr als zwei verschiedene Betriebsmodi vorgesehen sind oder auch aus verschiedenen Prognosedaten in Abhängigkeit von bestimmten Betriebsparametern ausgewählt werden soll. Im Messbetrieb wird dabei auf die jeweils aktuellen Prognosedaten zugegriffen, die im Parallelprozess der Schritte 100-150 regelmäßig aktualisiert werden, so dass im Messbetrieb jederzeit aktuelle Prognosen möglich sind.

## Patentansprüche

1. Erfassungseinrichtung (20) für Bedienhandlungen an Kraftfahrzeugen,
mit wenigstens einem Radarsensor (22),
mit wenigstens einer Steuerschaltung, welche mit dem wenigsten einen Radarsensor (22) gekoppelt ist,
wobei die Steuerschaltung (21) ausgebildet ist, den Radarsensor (22) anzusteuern und dessen Signale zu verarbeiten,
**dadurch gekennzeichnet,**
**dass** die Steuerschaltung (21) ausgebildet ist, den Radarsensor (22) gemäß wenigstens zwei verschiedenen Betriebsmodi anzusteuern, wobei ein Energiebedarf des Radarsensors (22) in einem ersten Betriebsmodus größer ist als in einem zweiten Betriebsmodus,
wobei Prognosedaten, welche zeitbezogene Informationen zu einer Wahrscheinlichkeit von erwartbaren Bedienvorgängen enthalten,
- in der Steuerschaltung (21) generiert werden oder
- in der Steuerschaltung (21) von externen Datenquellen (30) empfangen werden,
wobei die Steuerschaltung einen Speicher (24) aufweist und ausgebildet ist, die Prognosedaten in dem Speicher (24) abzulegen,
wobei die Steuerschaltung (21) ausgebildet ist, den Betriebsmodus in Abhängigkeit von den im Speicher (24) gespeicherten Prognosedaten auszuwählen.

2. Erfassungseinrichtung (20) nach Anspruch 1, wobei die Steuerschaltung (21) ausgebildet ist, im ersten Betriebsmodus gegenüber dem zweiten Betriebsmodus häufiger Messungen mit dem Radarsensor (22) auszulösen.

3. Erfassungseinrichtung (20) nach einem der vorangehenden Ansprüche, wobei die Steuerschaltung (21) ausgebildet ist, Signaldaten des Radarsensors (22) zusammen mit Zeitinformationen in einem Speicher als Signalhistorie abzulegen,
wobei die Steuerschaltung (21) wenigstens teilweise unter Auswertung der Signalhistorie die Prognosedaten erzeugt.

4. Erfassungseinrichtung (20) nach Anspruch 3, wobei die Steuerschaltung (21) ausgebildet ist, die Signalhistorie zu aktualisieren.

5. Erfassungseinrichtung (20) nach Anspruch 3 oder 4, wobei die Steuerschaltung (21) ausgebildet ist, mit wenigstens einer Teilmenge der Daten der Signalhistorie ein neuronales Netz zu trainieren und die Prognosedaten wenigstens teilweise aus den Ausgabedaten des neuronalen Netzes zu bilden.

6. Erfassungseinrichtung (20) nach Anspruch 5, wobei die Steuerschaltung (21) ausgebildet ist, ein Training des neuronalen Netzes in zeitlichen Abständen mit der jeweils aktuellen Signalhistorie erneut durchzuführen.

7. Erfassungseinrichtung (20) nach einem der vorangehenden Ansprüche, wobei die Steuerschaltung (21) ausgebildet ist, Umgebungsinformationen von einer externen Datenquelle zu empfangen und diese zusammen mit den Prognosedaten auszuwerten, um einen Betriebsmodus für den Radarsensor (22) auszuwählen.

8. Erfassungseinrichtung (20) nach Anspruch 7, wobei die Umgebungsinformationen wenigstens teilweise ausgewählt sind aus
- aktuellen Ortsinformationen,
- aktuellen Betriebsinformationen eines Fahrzeugs, welchem die Erfassungseinrichtung (20) zugeordnet ist
- aktuellen Informationen zu Mobilgeräten, welche mit der externen Datenquelle gekoppelt sind.

9. Erfassungseinrichtung (20) nach einem der vorangehenden Ansprüche, wobei dies Steuerschaltung (21) ausgebildet ist, den Radarsensor (22) mit mehr als zwei Betriebsmodi anzusteuern, die sich jeweils in ihrem Energiebedarf unterscheiden, wobei einer der Betriebsmodi jeweils anhand von Prognosedaten ausgewählt wird.

10. Erfassungseinrichtung (20) nach einem der vorangehenden Ansprüche, wobei mehrere Radarsensor (22) en umfasst sind, wobei die Steuerschaltung (21) die Radarsensor (22) en in Abhängigkeit von den Prognosedaten getrennt, in Gruppen oder gemeinsam ansteuert.

11. Erfassungseinrichtung (20) nach Anspruch 10 der vorangehenden Ansprüche, wobei in der Steuereinrichtung mehrere Sätze von Prognosedaten gespeichert sind, die jeweils einem oder mehreren Radarsensor (22) en zugeordnet sind.
